# EUROPEAN PATENT APPLICATION

(11) **EP 2 420 882 A1**
(43) Date of publication of application: **22.02.2012**
(21) Application number: 10305893.9
(22) Date of filing: 16.08.2010
(51) Int. Cl.: G02F 1/017

(54) **Active photonic device with flattened photo-generated carrier distribution**

(71) Applicant: Alcatel Lucent, 75007 Paris (FR)
(72) Inventor: Kazmierski, Christophe, 91460 Marcoussis (FR); Dupuis, Nicolas, Holmdel, NJ 07733 (US); Decobert, Jean, 91460 Marcoussis (FR)
(74) Representative: Shamsaei Far, Hassan

(57) **Abstract**

An active photonic device (D), comprises a waveguide (W) having front (FF) and end (EF) faces, in which carriers can be photo-generated, and having an absorption coefficient which varies with the distance from its front face (FF).

## Description

The present invention relates to photonics, and in particular to active photonic devices comprising a waveguide in which carriers can be photo-generated.

### BACKGROUND ART

As it is known by a person skilled in the art, some of the above mentioned active photonic devices show a carrier distribution (or concentration) that decreases (possibly exponentially) from their waveguide front face towards their waveguide end face. This results from the fact that photo-generated carriers piled-up in the front part of the waveguide.

This is notably the case of active photonic devices based on electro-absorption modulation (EAM), such as standalone electro-absorption modulators and integrated electro-absorption modulated lasers (or EMLs). More precisely, because of the photo-generated carrier pile-up in the waveguide front part, these active photonic devices show an output power limitation (or power saturation) and a bandwidth reduction effect that is induced by an unsufficient photo-generated carrier sweep-out in their quantum wells or bulk structure.

### SUMMARY

A solution has been proposed to reduce the power saturation into EAM photonic devices, which relates to decreasing the valence band barrier in the quantum well structures to allow more efficient photo-hole transport as slowest carrier type. This is generally achieved by using a lower gap alloy for barrier material epitaxial growth. However with such a solution the acting quantum levels are typically less electronically confined which decreases the quantum confined Stark effect (or QCSE) that is used for fast absorption modulation. Lower QCSE notably typically impacts the ability of EAM devices to conserve a high extinction ratio, especially in very fast short-waveguide components.

To overcome this drawback it may be possible to increase the number of quantum wells in order to preserve high absorption QCSE by an increase of the active volume (i.e. lightwave confinement). However, carrier transport phenomena are typically emphasized in larger size active region and a proper trade-off is difficult to find.

To reduce the power saturation it may be also possible to implement a solution similar to the one typically proposed for edge PIN photodiodes. Such solution typically comprises avoiding the carrier pile-up by distributing absorption via lightwave evanescent coupling between a supplementary transporting waveguide and an absorbing waveguide. This kind of coupling typically provides roughly linear distribution of the absorbed power instead of the exponential direct material absorption. However such a solution typically modifies the waveguide structure and is hardly compatible with the QCSE strength that is required for electro-absorption modulation. Moreover, in the case of integrated circuits this solution typically introduces a supplementary design and fabrication complexity that is not always desired or compatible with required component performances.

Embodiments of the invention aim at overcoming at least some of the drawbacks of conventional active photonic devices comprising a waveguide in which carriers may be photo-generated.

For this purpose, embodiments of the invention propose an active photonic device comprising a waveguide in which carriers may be photo-generated and having an absorption coefficient which varies with the distance from its front face (by means of a gap variation), so as to avoid a carrier pile-up in a front part thereof, instead of being constant (as is typically the case in the state of art).

The active photonic device according to the invention may include additional characteristics considered separately or combined, and notably:
- the absorption coefficient may have a value which increases from the waveguide front face to the waveguide end face;
   ➢ the absorption coefficient value may have a linear increase;
- the variation of the absorption coefficient may be obtained by selective area growth (or SAG);
- the device may constitute an electro-absorption modulator or an electro-absorption modulated laser;
   ➢ its waveguide may comprise a plurality of quantum wells made of semiconducting material. In this case it may be arranged for carrying out a light modulation by means of a quantum confined Stark effect (or QCSE);
   ➢ in a variant the waveguide of the device may be made of bulk semiconducting material and may be arranged for carrying out a light modulation by means of a Franz-Keldysh effect.

Some embodiments of the invention feature an electro-absorption modulator comprising the device as described herein or an electro-absorption modulated laser comprising the device as described herein.

### BRIEF DESCRIPTION OF THE DRAWNINGS

Other features and advantages of the invention will become apparent on examining the detailed specifications hereafter and the appended drawings, wherein:
- figure 1 schematically and functionally illustrates an example of embodiment of an electro-absorption modulator according to the invention,
- figure 2A illustrates an example of variation of the waveguide absorption coefficient as a function of the distance from the waveguide front face,
- figure 2B illustrates an example of variation of the number of carriers photo-generated into the waveguide as a function of the distance from the waveguide front face,
- figure 3 illustrates examples of variation of the power transmission of an example of electro-absorption modulator of the art (C1) and of an equivalent example of electro-absorption modulator according to embodiments of the invention (C2) as a function of the distance from the waveguide front face, and
- figure 4 illustrates examples of variation of the reduced carrier concentration of an example of electro-absorption modulator of the art (C1') and of an equivalent example of electro-absorption modulator according to the invention (C2') as a function of the distance from the waveguide front face.

The appended drawings may serve not only to complete the invention, but also to contribute to its definition, if need be.

### DETAILED DESCRIPTION

Embodiments of the invention aim at providing an active photonic device (D) comprising a waveguide (W) in which carriers can be photo-generated.

In the following description, it will be considered, as example, that the active photonic device (D) is an electro-absorption modulator. But, the invention is not limited to this type of active photonic device. Indeed it concerns any type of active photonic device comprising a waveguide in which carriers can be photo-generated, and notably, but not exclusively, an electro-absorption modulated laser (i.e. a photonic integrated circuit comprising a distributed feedback laser coupled to an electro-absorption modulator) or a photodetector.

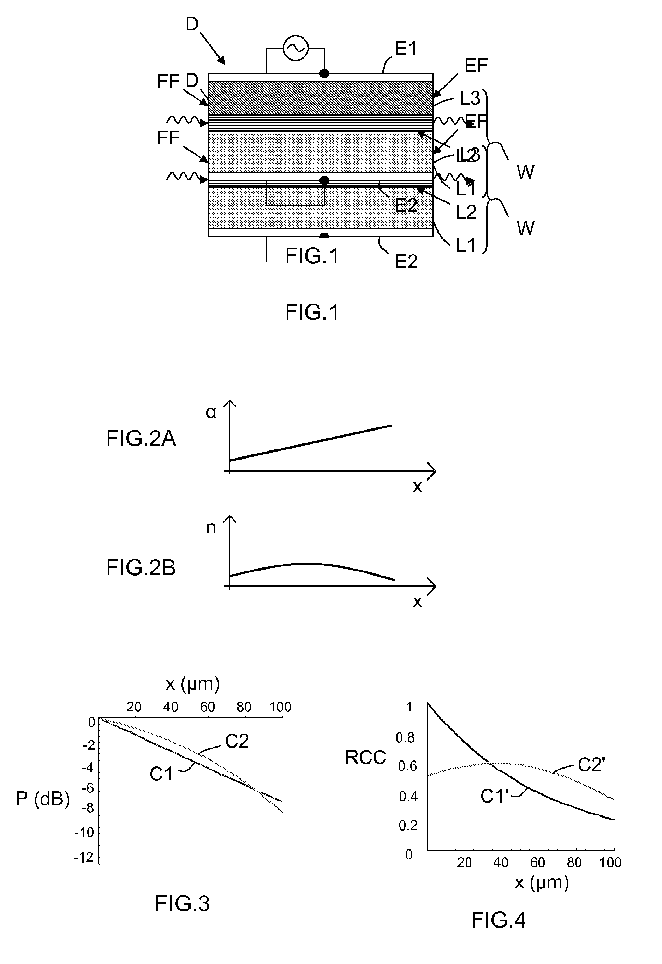

As illustrated in figure 1, and as mentioned above, an active photonic device D, according to embodiments of the invention, comprises at least a waveguide W. In the case where the active photonic device D is an electro-absorption modulator (as illustrated), it further comprises at least two electrodes E1 and E2 that are respectively connected to opposite faces (e.g. upper and lower faces in figure 1) of the waveguide W, which are approximately perpendicular to the waveguide front face FF and waveguide end face EF (e.g. side faces in figure 1).

The waveguide front face FF is the face which may receive the light to be modulated, while the waveguide end face EF is the face which may output the light that has been modulated.

It is important to note that in the non limiting illustrated example the electro-absorption modulator D has a transmission configuration (i.e. opposite front FF and end EF faces). But, in a variant it may have a reflection configuration (i.e. mixed up front FF and end EF faces).

It is recalled that the electrodes E1 and E2 are preferably intended for applying an electric field into the waveguide W in a direction which is orthogonal to the modulated light beam, in order to induce the desired modulation. Different arrangements of the electrodes may be used, and notably on the lateral faces of the waveguide W.

According to embodiments of the invention the waveguide W has an absorption coefficient α which may vary with the distance from its front face FF (by means of a gap variation), instead of being constant as is typically the case in the state of art.

It is important to note that the invention allows to keep the general structure of the waveguide of the art unchanged, and only requires slight modifications of the section of this waveguide structure (and notably a slight modification of the waveguide thickness and of the gap).

As illustrated in the example of figure 1, embodiments of the invention may be advantageously implemented by means of a waveguide W comprising a plurality of quantum wells L2 (for instance 5 or 10, or even more) made of semiconducting material (for instance of the III-V type), and intercalated between two layers L1 and L3 also made of semiconducting material (for instance of the III-V type). For instance, layer L1 may be a substrate made of n-doped InP, multilayer L2 may be made of several alternations of layers respectively made of GaInAs and AIGaInAs, and layer L3 may be made of p-doped InP. Such a waveguide arrangement may be advantageously capable of carrying out a light modulation by means of a quantum confined Stark effect (QCSE).

But other waveguide arrangements may be used, and notably arrangements made of bulk semiconducting material, such as n-doped InP for layer L1, InGaAs for layer L2 and p-doped InP for layer L3. In this case, the waveguide W is preferably arranged for carrying a light modulation by means of a Franz-Keldysh effect.

For instance, and as illustrated in the example of figure 2A, the value of the waveguide absorption coefficient α may increase linearly from the waveguide front face FF to the waveguide end face EF. More precisely in the illustrated example of figure 2A the waveguide absorption coefficient value α has a linear increase (α = ax + b, where x is the distance from the waveguide front face FF and a and b are constants), but other type of increase may be used depending on the desired application. Some other examples of variation may be used, and notably a quadratic variation or an exponential variation.

The function defining the variation of α with the distance x may be chosen in order to conserve the total required absorption. So, the maximum value of the waveguide absorption coefficient α may be possibly larger than that of an equivalent waveguide of the art (i.e. with a constant waveguide absorption coefficient).

The increase of the waveguide absorption coefficient α may be obtained by a decrease of the material gap. This increase (or more generally variation) of the waveguide absorption coefficient α may be advantageously obtained by a single step epitaxy, and notably by the well-known selective area growth (or SAG) which allows a flexible gap engineering.

With such a variation of the waveguide absorption coefficient α, it is possible to partially, or even totally (depending on the slope of the variation), suppress the carrier pile-up in the front part of the waveguide W. So, the maximum photo-generated carrier concentration or distribution n(x) is reduced (i.e. the curve n(x) is flattened) as illustrated in the example of figure 2B, which leads advantageously to an enhanced saturation power.

A comparison of the respective variations of the power transmission P(x) of an example of electro-absorption modulator of the art (i.e. with a constant waveguide absorption coefficient α - curve C1) and of an equivalent example of electro-absorption modulator D according to embodiments of the invention (i.e. with a variable waveguide absorption coefficient α - curve C2), as a function of the distance x from the waveguide front face FF, is illustrated in figure 3.

In this example, it is considered, on the one hand, that each electro-absorption modulator has a length equal to about 100 µm, comprises a waveguide W with 10 quantum wells and an optical confinement parameter ^{┌}_{TE} = 0.2, is subject to an electrical field equal to or about 80 kV/cm and is arranged for carrying out a light modulation by means of a quantum confined Stark effect (or QCSE), and on the other hand, that the modulator of the art (C1) has a constant waveguide absorption coefficient α(x) = A, while the modulator D (C2) has a variable waveguide absorption coefficient α(x) = 0.5*A*(1 + 1.2*x). As illustrated in figure 3, the light power extinction of the modulator D (according to the invention) may be approximately identical to, or even better, than the light power extinction of the modulator of the art. It may be shown that shorter modulators D (for instance as short as 50 µm) may also have similar light power extinction.

A comparison of the respective variations of the reduced (or normalized) photo-generated carrier concentration RCC(x) of the two above mentioned examples of electro-absorption modulators of the art (constant α - curve C1') and according to embodiments of the invention (variable α - curve C2'), as a function of the distance from the waveguide front face FF, is illustrated in figure 4. As illustrated, in the case of a constant waveguide absorption coefficient α (C1') the photo-carrier generation corresponds to an exponential decay with a pile-up in the front part of the modulator of the art. In the case of a variable waveguide absorption coefficient α (C2') providing an equivalent total absorption, the photo-carrier generation may be significantly flattened over all the modulator length. The carrier concentration peak may then be about 40% smaller than the one in the pile-up and, consequently, the carrier induced saturation power may be approximately improved by the same amount.

It is important to note that the variation of the waveguide absorption coefficient α may also be obtained by means of separate butt-joint sections in which the different sections have different values of waveguide absorption coefficient α.

Moreover the implementation of the invention is compatible with other known means of saturation power enhancements (like the so-called quantum well barrier height adjustment).

The invention offers several advantages amongst which the following are in particular worth mentioning:
- an increase of the optical output power of integrated transmitters for very high speed applications (typically from 40 Gb/s to 1000 Gb/s),
- an improve of the optical output power of EAM based active photonic devices for a given modulation rate while conserving a low power consumption.

The invention is not limited to the embodiments of active photonic device described above, only as examples, but it encompasses all alternative embodiments which may be considered by one skilled in the art within the scope of the claims hereafter.

## Claims

1. An active photonic device (D) comprising a waveguide (W) having a front face (FF) and an end face (EF) and adapted for photo-generating carriers, wherein said waveguide (W) has an absorption coefficient which varies with a distance from its front face (FF).

2. An Active photonic device according to claim 1, wherein said absorption coefficient has a value which increases from the waveguide front face (FF) to the waveguide end face (EF).

3. An Active photonic device according to claim 2, wherein said absorption coefficient value has a linear increase.

4. An active photonic device according to any one of claims 1 to 3, wherein said variation of the absorption coefficient is obtained by selective area growth.

5. An active photonic device according to any one of claims 1 to 4, wherein it constitutes an electro-absorption modulator.

6. Active photonic device according to any one of claims 1 to 4, wherein it constitutes an electro-absorption modulated laser.

7. An active photonic device according to any one of claims 5 and 6, wherein said waveguide (W) comprises a plurality of quantum wells made of semiconducting material, and in that it is arranged for carrying out a light modulation by means of a quantum confined Stark effect.

8. An active photonic device according to any one of claims 5 and 6, wherein said waveguide (W) is made of bulk semiconducting material, and in that it is arranged for carrying out a light modulation by means of a Franz-Keldysh effect.

9. An electro-absorption modulator comprising the device of any one of claims 1 to 5 or claims 7 or 8.

10. An electro-absorption modulated laser comprising the device of any one of claims 1 to 4 or claims 5 to 8.
